# DEMANDE DE BREVET EUROPEEN

(11) **EP 1 555 506 A1**
(43) Date de publication de la demande: **20.07.2005**
(21) Numéro de dépôt: 04075041.6
(22) Date de dépôt: 14.01.2004
(51) Int. Cl.: G01B 11/25, G01S 17/02, G06K 7/10, G01C 3/10

(54) **Dispositif de prise d'image assurant une mise au point indépendante de la position de l'objet**

(71) Demandeur: Wow Company S.A., 5000 Namur (BE)
(72) Inventeur: Demarteau, Jo l, 5000 Namur (BE); Dupont, Fabrice, 5000 Namur (BE); Gilliard, Jean-Marc, 6500 Renlies (BE)

(57) **Abrégé**

La présente invention concerne un dispositif de prise d'image comprenant un système optique (300) incluant une ou plusieurs lentilles, un récepteur d'image (320) et un système d'éclairage (310), caractérisé en ce que le faisceau d'éclairage est contenu dans une surface (311) et que le récepteur est placé sur la surface (312) qui est l'image au travers du système optique (300) de ladite surface d'éclairage (311) ; cette position garantit une image nette quelle que soit la position de l'objet.

Le dispositif selon la présente invention peut être utilisé, par exemple, pour des systèmes de lectures de codes à barres ou de télémétrie ou de contrôle de surface ou encore de prise de vues aériennes et/ou nocturnes. Pour toutes ces applications, l'invention présente l'avantage d'assurer une mise au point correcte indépendante de la distance des objets ciblés par rapport au système optique.

## Description

### Domaine de l'invention

La présente invention concerne un dispositif de prise d'image comprenant une ou plusieurs lentilles, un récepteur destiné à capter l'image et un système d'éclairage de l'objet.

### Etat de l'art

La figure 1 rappelle les constructions utilisées en optique géométrique pour déterminer l'image d'un objet à travers une lentille.
La figure 2 illustre un système de prise de vue classique, où l'image est recueillie par un récepteur placé dans un plan parallèle au plan de la lentille.

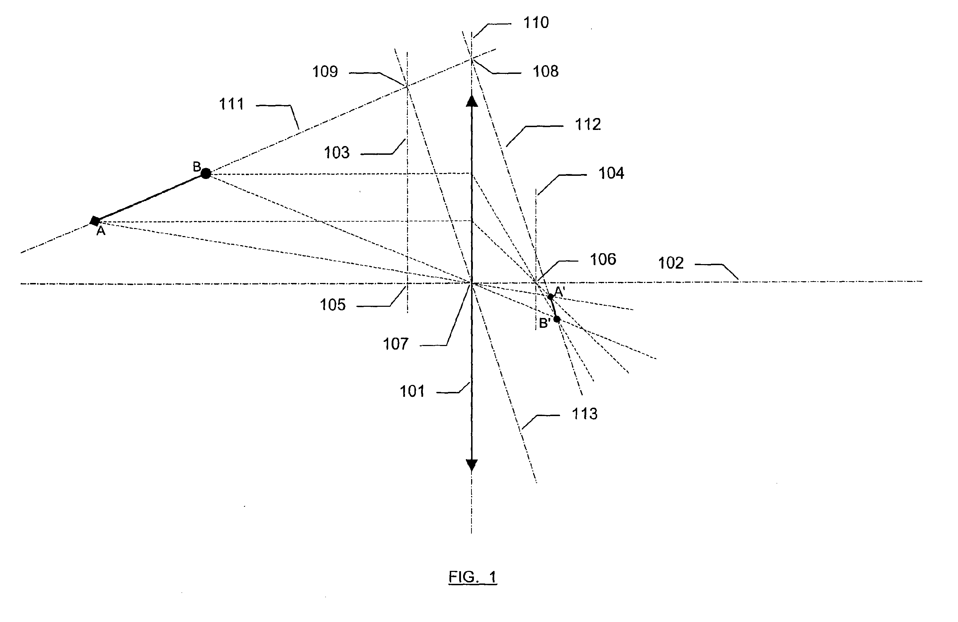

L'optique géométrique fait partie de l'enseignement de la physique et on trouvera de multiples ouvrages traitant du sujet. Il est bien connu dans l'art antérieur que les constructions de l'optique géométrique sont valables dans les limites de l'approximation de Gauss, c'est-à-dire lorsque chaque point éclairé de l'objet n'envoie effectivement dans le système optique qu'un faisceau dont les rayons ne s'écartent que faiblement de la normale à chaque surface rencontrée à l'intérieur dudit système optique.
Pour faciliter la compréhension de la figure 1, le système optique (101) a été limité à une seule lentille, symétrique par rapport à l'axe optique (102), mais le raisonnement qui va suivre peut aisément être extrapolé au cas où plusieurs lentilles sont combinées, puisqu'il suffit de reproduire successivement des constructions similaires.
Soit donc la lentille (101) dont les plans focaux (103) et (104) sont les plans perpendiculaires à l'axe optique (102) passant respectivement par le foyer objet (105) et le foyer image (106).
Nous considérons l'objet (AB) rectiligne, contenu dans un plan (111) qui intercepte le plan de la lentille (110) en (108). L'image (A'B') de l'objet (AB) est obtenue en considérant 2 rayons lumineux particuliers issus des extrémités (A) et (B) de l'objet. Les rayons parallèles à l'axe optique (102) se réfractent en passant par le foyer image (106) de la lentille, tandis que les rayons passant par le centre optique (107) ne sont pas déviés. On obtient ainsi l'image (A'B'), qui est également contenue dans un plan (112) qui intercepte le plan de la lentille en (108). Cette propriété reste valable quelle que soit la position de l'objet (AB) par rapport à la lentille (101); en particulier, si le plan (111) est perpendiculaire à l'axe optique (102), c'est-à-dire que l'objet est placé parallèlement au plan de la lentille (110), le plan (112) est également perpendiculaire à l'axe optique (102) et l'image est, elle aussi, parallèle au plan de la lentille. Une autre propriété remarquable du système est que le plan (113) parallèle au (112) et qui passe par le centre optique (107) intercepte le plan focal objet (103) de la lentille en (109), qui est également l'intersection de ce plan focal avec le plan (111) contenant l'objet (AB).

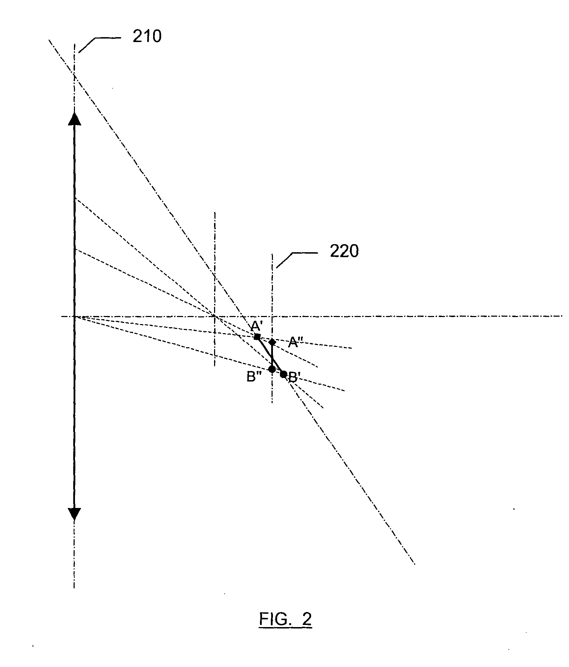

La figure 2 montre un système de prise de vue classique, où l'image est recueillie par un récepteur placé dans un plan (220) parallèle au plan le la lentille (210). Ce récepteur consiste, par exemple, en une émulsion photographique ou un capteur électronique de type CCD ("charge coupled device") ou CMOS ("complementary métal oxide semiconductor") ; sa position par rapport à la lentille peut généralement être ajustée de manière à effectuer la mise au point de l'image. Sur cette figure 2, on a repris les constructions de la figure 1 pour déterminer l'image (A'B') de l'objet (AB), mais l'objet lui-même n'a plus été représenté.
On constate qu'il est théoriquement impossible d'obtenir une image nette de l'ensemble de l'objet (sauf dans le cas où ce dernier est parallèle au plan de la lentille). Si, comme illustré par la figure 2, le plan (220) est positionné pour optimiser la netteté aux environs du centre de l'image (A'B'), on constate que les extrémités de l'objet produiront les images (A") et (B") qui ne sont plus ponctuelles. Toutefois, tant que cet astigmatisme ne dépasse pas les limites de la résolution du récepteur d'image (taille des grains de l'émulsion photographique ou des cellules du capteur CCD ou CMOS, par exemple), l'image pourra encore être considérée comme nette.

La chambre photographique est un dispositif qui permet notamment d'incliner le plan (220) du récepteur d'image par rapport à l'axe optique et donc d'obtenir une image nette d'objets inclinés par rapport au plan de la lentille, mais cela suppose un réajustement de la position du récepteur pour chaque objet dont on veut capter l'image.
On trouve également dans l'art antérieur divers dispositifs permettant de faciliter ou d'effectuer automatiquement la mise au point de l'image en fonction de la position de l'objet par rapport au système optique, mais ils requièrent généralement des systèmes de mesure de distance et/ou d'analyse d'image relativement sophistiqués et le réglage doit être modifié lorsque la position de l'objet change.
L'invention qui va être décrite ci-après permet, d'une part, d'éviter toute manipulation ou adaptation pour la mise au point et, d'autre part, d'assurer la mise au point correcte simultanément pour des objets situés à des distances différentes du système optique.

### But de l'invention

L'objet de la présente invention est un dispositif de prise d'image comprenant une ou plusieurs lentilles, un récepteur destiné à capter l'image et un système d'éclairage de l'objet, caractérisé en ce que l'objet ciblé est éclairé par un faisceau contenu dans une surface et que le récepteur est placé sur la surface qui est l'image au travers de la ou des lentilles de ladite surface d'éclairage.
Les rayons résultants de la réflexion du faisceau d'éclairage sur l'objet sont captés, après avoir traversé le système optique, par le récepteur d'image, dont la position constitue l'originalité de l'invention ; cette position garantit une image nette quelle que soit la position de l'objet. En effet, dans les limites de l'approximation de Gauss, l'image obtenue, qui est celle de l'intersection de l'objet avec la surface d'éclairage, est toujours nette puisque tout point contenu dans la surface d'éclairage donnera une image nette sur la surface image où est placé le récepteur.
Si une image de l'entièreté de l'objet est souhaitée, ledit dispositif de prise d'image pourra être déplacé par rapport à l'objet (ou inversement), de manière à faire balayer l'ensemble de l'objet par le faisceau d'éclairage.

### Description de l'invention

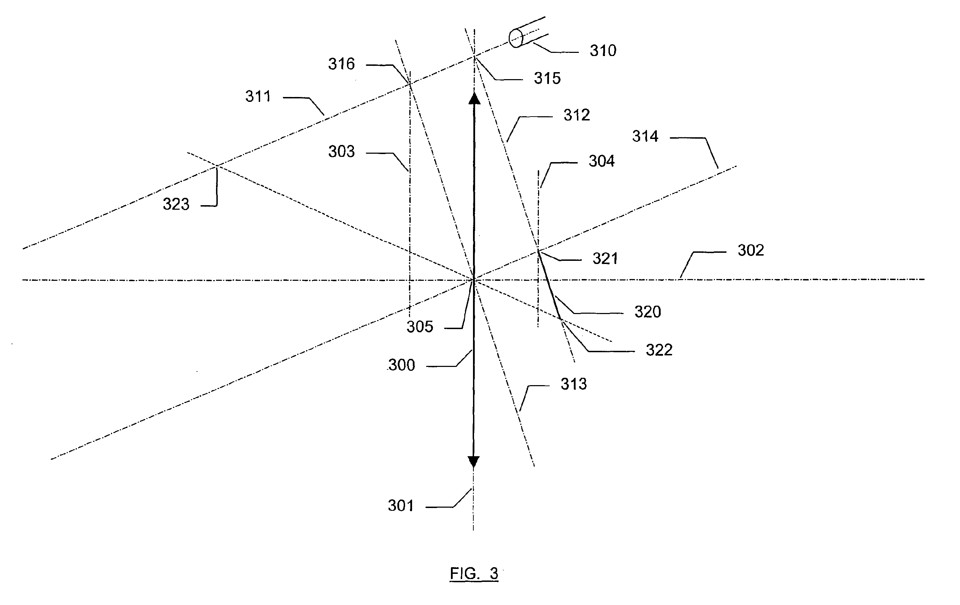

La présente invention traite d'un dispositif de prise d'image, illustré par la figure 3, comprenant un système optique (300) incluant une ou plusieurs lentilles, un récepteur d'image (320) et un système d'éclairage (310), caractérisé en ce que le faisceau d'éclairage est contenu dans une surface (311) et que le récepteur (320) est placé sur la surface (312) qui est l'image au travers du système optique (300) de ladite surface d'éclairage (311).

Dans une réalisation particulière de l'invention, le faisceau d'éclairage est produit par un laser, qui peut être couplé à un dispositif de balayage ou de diffraction pour la génération du faisceau. De tels lasers et dispositifs de balayage présentent l'avantage d'être largement disponibles sur le marché.
Afin de pouvoir effectuer l'acquisition d'image en temps réel, le récepteur d'image (320) sera avantageusement réalisé à l'aide d'un capteur CCD ou CMOS.
Dans un mode préféré, la surface d'éclairage (311) sera plane, de sorte que des récepteurs d'images couramment disponibles sur le marché pourront être placés sur la surface image (312), également plane.
De préférence, la position du récepteur (320) pourra être modifiée par rapport au système optique (300) et la position de la surface d'éclairage (311) pourra être adaptée en conséquence, de manière à pouvoir optimiser l'utilisation du récepteur (320) en fonction du ou des objets à observer. Inversement, dans une autre variante de l'invention, c'est la position du récepteur (320) qui est adaptée en fonction de la surface d'éclairage (311), par exemple pour optimiser les conditions d'éclairage de l'objet.
Le dispositif selon la présente invention peut avantageusement comprendre un système asservi destiné à adapter automatiquement la position du récepteur (320) en fonction de la position de la surface d'éclairage (311), ou inversement.
Selon un mode particulier, le dispositif comprend des moyens mécaniques permettant de faire varier la position relative d'un objet, de manière à pouvoir capter plusieurs images correspondant à différentes sections de cet objet. Le changement de position relative peut être obtenu par déplacement de l'objet ou du dispositif de prise d'image ou encore des deux.

Le dispositif selon l'invention peut être avantageusement doté de moyens de calcul permettant de reconstituer à partir d'images partielles une image tridimensionnelle de l'objet complet, ou d'une partie de cet objet.

La figure 3 décrit une forme particulière du dispositif selon la présente l'invention. Ce dispositif comprend un système optique (300) qui, pour simplifier le raisonnement, a été illustré par une simple lentille et un système d'éclairage (310) dont le faisceau est contenu dans une surface (311). La figure 3 illustre une réalisation préférée de l'invention, pour laquelle cette surface est un plan.
Bien que la représentation graphique soit plus complexe, le raisonnement qui va suivre s'applique dans le cas plus général où le système optique est constitué de plusieurs lentilles ou encore lorsque la surface d'éclairage n'est pas un plan.

Les constructions de la figure 1 nous ont montré que tout point contenu dans le plan (311) donnera une image nette dans le plan (312), qui inclut l'intersection (315) du plan (311) avec le plan de la lentille (301) et qui est parallèle au plan (313) contenant l'intersection (316) du plan (311) avec le plan focal objet (303) et passant par le centre optique (305). L'image d'un point quelconque du plan (311) se trouve à l'intersection du plan (312) avec le rayon issu dudit point et passant par le centre optique (305).
L'originalité de la présente invention consiste à placer le récepteur d'image (320) (par exemple une émulsion photographique ou un capteur CCD ou CMOS) sur la surface (312) image, à travers le système optique, de la surface d'éclairage (311).
La figure 3 représente une réalisation particulière où la position dudit récepteur (320) est choisie selon les critères décrits ci-après. L'extrémité (321) est déterminée par l'intersection du plan (312) avec le plan focal image (304) et aussi avec le plan (314) parallèle à (311) et passant par le centre optique (305); elle correspond à l'image de points situés dans le plan (311) à une distance infinie de la lentille.
L'extrémité (322) du capteur (320) détermine avec le plan d'éclairage (311) l'intersection (323) dont elle est l'image et qui est la limite la plus proche de la lentille dont une image peut être captée. Rappelons que les conditions de Gauss imposent que les rayons issus de (323) et aboutissant en (322) forment avec l'axe optique (302) un angle suffisamment faible, ce qui limite l'éloignement de (322) par rapport à (321). Dans une réalisation pratique, cet éloignement est de toute façon limité par la taille maximale des capteurs d'image disponibles sur le marché. La figure 3 illustre une réalisation préférée de l'invention où la position de (322) a été choisie de manière à ce que l'angle que forme un rayon joignant (323) à (322) avec l'axe optique (302) soit approximativement égal à celui que forme le plan (314) avec ce même axe optique, ces 2 angles étant suffisamment petits pour que les conditions de Gauss soient respectées.
Un objet quelconque éclairé par le faisceau dans le plan (311) produira donc une image de l'intersection dudit objet avec (311) et cette image sera toujours nette sur le capteur (320). Si nécessaire, différentes images correspondant à différentes sections de l'objet pourront être obtenues en effectuant un balayage dudit objet par le faisceau d'éclairage, grâce à un déplacement par rotation et/ou translation de l'ensemble du dispositif de prise de vue par rapport à l'objet.

Les conclusions qui précèdent restent valables dans le cas plus général où le système optique est constitué de plusieurs lentilles ou encore lorsque la surface d'éclairage n'est pas un plan. Dans ce dernier cas, la surface contenant le récepteur, elle non plus, n'est pas plane et le récepteur devra donc être spécifiquement adapté.

La présente invention permet donc de réaliser un dispositif de prise d'images où l'objet est éclairé par un faisceau contenu dans une surface, de telle sorte que le faisceau réfléchi par l'objet forme une image toujours nette sur le récepteur d'image, quelle que soit la position dudit objet. L'avantage principal de ce dispositif est de ne nécessiter aucun réglage et/ou aucun calcul pour effectuer la mise au point, mais aussi d'autoriser la mise au point correcte simultanément pour des objets proches ou lointains. En rapprochant ou éloignant le dispositif de l'objet, on peut obtenir un effet de zoom, tandis que la mise au point reste toujours correcte. On peut aussi manipuler l'objet et modifier sa position par rapport au dispositif de prise d'image sans jamais compromettre la mise au point.
Pour obtenir différentes images d'un objet, correspondant à différentes positions dudit objet par rapport au plan d'éclairage et/ou au système optique, on peut déplacer l'objet et/ou déplacer l'ensemble du dispositif constitué du système optique, du faisceau d'éclairage et du récepteur d'image.

Le dispositif selon la présente invention peut être utilisé, par exemple, pour des systèmes de lectures de codes à barres ou de télémétrie ou de contrôle de surface ou encore de prise de vues aériennes et/ou nocturnes. Pour toutes ces applications, l'invention présente l'avantage d'assurer une mise au point correcte indépendante de la distance des objets ciblés par rapport au système optique.
Ces exemples sont fournis à titre indicatif, de manière non exhaustive et ne sont aucunement limitatifs des applications possibles de l'invention.

### Exemple

Un exemple de réalisation de l'invention va être décrit en se référant aux notations de la figure 3, mais les distances et angles utilisés dans l'exemple concret et précisés ci-après diffèrent de ceux de ladite figure. Cet exemple décrit ci-après est donné à titre purement illustratif et ne doit donc aucunement être considéré comme exhaustif ou limitatif des applications possibles de la présente invention.

Le système optique, constitué de plusieurs lentilles, a une distance focale de 25 mm et un diamètre extérieur de d'environ 5 cm ; il est équipé d'un diaphragme pour le réglage de l'ouverture et d'un mécanisme de translation de l'ensemble des lentilles pour la mise au point. L'éclairage est réalisé par système comprenant un laser et un prisme de diffraction, permettant de réaliser un faisceau contenu dans un plan. Le récepteur d'image est un capteur CMOS de 640 x 480 pixels utiles et d'environ 4mm sur 5mm d'encombrement. Tous ces éléments sont des dispositifs standards, largement disponibles dans le commerce.

Un support a été spécifiquement usiné de manière à pouvoir fixer le capteur CMOS par rapport au système optique. L'angle du plan du capteur par rapport à l'axe optique a été fixé à 78°, ce qui signifie que, en se référant aux notations de la figure 3, l'angle du plan (313) par rapport au plan focal (303) est de 12°. On en déduit la distance de (305) à (316) en divisant la distance focale par le sinus de cet angle et on obtient la valeur de 120 mm; on peut également déterminer la distance de (316) à l'axe optique (302), qui est d'environ 118 mm.

L'angle du plan (314) avec l'axe optique (302) détermine la position de l'extrémité (321) du capteur CMOS. Connaissant la taille de ce capteur et la distance focale du système optique, il est aisé de déterminer que cet angle doit être d'environ 4,5°, pour assurer au capteur un placement approximativement symétrique par rapport à l'axe optique. Cette condition de symétrie est propre à la réalisation particulière de l'invention qui est décrite ici et ne constitue aucunement une limitation des variantes possibles de l'invention. De même, dans cette réalisation particulière, l'extrémité (321) du capteur a été placée de manière à pouvoir recevoir l'image d'objets situés théoriquement à une distance infinie de la lentille, mais d'autres configurations peuvent être envisagées pour répondre aux besoins spécifiques d'autres applications. Sachant que le plan (314) de la figure 3 est parallèle au plan (311), le choix qui a été fait ici détermine également la distance de l'intersection (315) des plans (311) et (312) par rapport à l'axe optique (302), qui est d'environ 12 cm.

Le laser peut être placé dans n'importe quelle position compatible avec la position du plan du faisceau d'éclairage (311). Pour cet exemple de réalisation particulière, le laser a été placé à l'intersection (315), soit à une distance de 12 cm de l'axe optique, avec une inclinaison du faisceau de 4,5° par rapport à l'axe optique. Enfin, l'extrémité (322) du capteur permet de déterminer la position (323) de l'objet le plus proche dont on peut capter l'image, qui est située à environ 78 cm de la face frontale de la lentille.

## Revendications

1. Dispositif de prise d'image comprenant un système optique (300) incluant une ou plusieurs lentilles, un récepteur d'image (320) et un système d'éclairage (310), **caractérisé en ce que** le faisceau d'éclairage est contenu dans une surface (311) et que le récepteur (320) est placé sur la surface (312) qui est l'image au travers du système optique (300) de ladite surface d'éclairage (311).

2. Dispositif de la revendication 1, **caractérisé en ce que** le faisceau d'éclairage est produit par un laser.

3. Dispositif de la revendication 1, **caractérisé en ce que** le récepteur d'image (320) est réalisé à l'aide d'un capteur CCD ou CMOS.

4. Dispositif de l'une quelconque des revendications 1 à 3, **caractérisé en ce que** la surface d'éclairage (311) est un plan.

5. Dispositif de l'une quelconque des revendications 1 à 4, **caractérisé en ce que** la position du récepteur (320) par rapport au système optique (300) peut être modifiée et la position de la surface d'éclairage (311) peut être adaptée en conséquence, ou inversement.

6. Dispositif de l'une quelconque des revendications 1 à 5, comprenant un système asservi destiné à adapter automatiquement la position du récepteur (320) en fonction de la position de la surface d'éclairage (311), ou inversement.

7. Dispositif de l'une quelconque des revendications 1 à 6, comprenant des moyens mécaniques permettant de faire varier la position relative d'un objet, de manière à pouvoir capter plusieurs images correspondant à différentes sections de cet objet.

8. Dispositif de l'une quelconque des revendications 1 à 7, comprenant des moyens de calcul permettant de reconstituer à partir d'images partielles une image tridimensionnelle de l'objet complet, ou d'une partie de cet objet.

9. Utilisation du dispositif selon l'une des revendications 1 à 8 pour la lecture de codes à barres.

10. Utilisation du dispositif selon l'une des revendications 1 à 8 pour des applications de télémétrie.

11. Utilisation du dispositif selon l'une des revendications 1 à 8 pour des applications de contrôle de surface.

12. Utilisation du dispositif selon l'une des revendications 1 à 8 pour des applications de prises de vues aériennes et/ou nocturnes.
